# EUROPÄISCHE PATENTANMELDUNG

(11) **EP 1 710 133 A2**
(43) Veröffentlichungstag der Anmeldung: **11.10.2006**
(21) Anmeldenummer: 06110541.7
(22) Anmeldetag: 01.03.2006
(51) Int. Cl.: B60R 21/16

(54) **Vorrichtung zur Aufprallerkennung**

(30) Priorität: 05.04.2005 DE 102005015568
(71) Anmelder: ROBERT BOSCH GMBH, 70442 Stuttgart (DE)
(72) Erfinder: Malicki, Siegfried, 74379, Ingersheim (DE); Baumann, Rudolf, 71701, Schwieberdingen (DE); Henne, Ralf, 74343, Sachsenheim (DE)

(57) **Zusammenfassung**

Es wird eine Vorrichtung zur Aufprallerkennung mittels einer zentral angeordneten vorzugsweise zweikanaligen Beschleunigungssensorik (12) vorgeschlagen, die für jeden der Kanäle jeweils eine Filterung mit einer ersten Grenzfrequenz eines ersten Filters aufweist, die niedriger ist als eine zweite Grenzfrequenz eines zweiten Filters, mit der ebenfalls die Signale eines kanals parallel gefiltert werden.

## Beschreibung

### Stand der Technik

Die Erfindung geht aus von einer Vorrichtung zur Aufprallerkennung nach der Gattung des unabhängigen Patentanspruchs.

Aus DE 103 06 707 A1 ist bereits eine zentral angeordnete Beschleunigungssensorik die zweikanalig ausgebildet ist, bekannt. Aus DE 102 44 095 A1 ist es bereits bekannt, ein Aufprall anhand von Signalen eines Upfrontsensors und eines zentral angeordneten Beschleunigungssensors zu erkennen.

### Vorteile der Erfindung

Die erfindungsgemäße Vorrichtung zur Aufprallerkennung mit den Merkmalen des unabhängigen Patentanspruchs hat demgegenüber den Vorteil, dass nunmehr durch die Verwendung von unterschiedlichen Grenzfrequenzen für die jeweils vorzugsweise beiden Signalpfade der vorzugsweise zwei Kanäle des zentral angeordneten, vorzugsweise zweikanaligen Beschleunigungssensors ausgelagerte Upfrontsensoren vermieden werden können und durch die Auswertung der unterschiedlichen Signale insbesondere die durch den breitbandigen zweiten Signalpfad eine einfache Diskriminierung des Frontalcrash-Typs im Auswertealgorithmus ohne die Verwendung von Upfrontsensoren möglich ist. Die unterschiedlichen Grenzfrequenzen werden durch unterschiedliche Filter realisiert, die digital oder analog ausgebildet sein können. Ist die erfindungsgemäße Beschleunigungssensorik derart angeordnet, dass sie zur Erfassung von Seitencrashereignissen dient, dann können periphere Seitensensoren vermieden werden und durch den breitbandigen zweiten Signalpfad können körperschallähnliche Plausibilitätssignale gewonnen werden.

Bei einem zweikanaligen Beschleunigungssensor liegen zwei Sensierungselemente vor, wobei pro Sensierungselement ein Kanal vorliegt. An diesen Kanal werden dann zwei Signalpfade angeschlossen, in denen Filter mit unterschiedlichen Grenzfrequenzen vorgesehen sind. Alternativ ist es möglich, dass ein mehrkanaliger Beschleunigungssensor vorgesehen ist, beispielsweise ein triaxialer, und/oder mehr als zwei Signalpfade an einen jeweiligen Kanal angeschlossen sind, wobei jeder Signalpfad eine andere Grenzfrequenz aufweist. Es ist jedoch auch möglich, dass ein lediglich einkanaliger Beschleunigungssensor eingesetzt wird.

Damit wird erfmdungsgemäß das Signal eines Kanals parallel mit unterschiedlichen Genzfrequenzen gefiltert. Dadurch ist es möglich unterschiedliche Informationen zu gewinnen, mit denen dann die Crashanalyse durchgeführt wird. Durch die Filterung mit der niedrigsten Genzfrequenz wird das Beschleunigungssignal, das zur herkömmlichen Analyse des Crashverlaufs, beispielsweise durch Integration mittels Schwellwertvergleich herangezogen wird. Durch die Filterung mit höheren Grenzfrequenzen können andere Informationen aus dem Sensorsignal extrahiert werden. Damit können insbesondere körperschallähnliche Informationen gewonnen werden.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallerkennung möglich.

Besonders vorteilhaft ist, dass die zweite Grenzfrequenz zwischen zwei und vier kHz liegt, denn bis zu diesem Frequenzbereich der vorliegend als breitbandig bezeichnet werden soll, sind die entscheidenden Informationen enthalten. Hierbei werden nunmehr körperschallähnliche Signale ausgewertet. Dagegen ist die erste Grenzfrequenz bei 400 Hz vorgesehen, hier wird das reine Beschleunigungssignal ausgewertet. Die Grenzfrequenzen können analog durch Tief- bzw. Bandpassfilter realisiert sein oder auch digital beispielsweise auch mittels Signalprozessoren verwirklicht werden.

Es ist weiterhin von Vorteil, dass die Beschleunigungssensorik zwar zentral angeordnet ist, aber sich außerhalb des Steuergeräts befindet. Damit kann dann das Steuergerät mit seinem entsprechenden Raumformerfordernis an einer entsprechenden Stelle im Fahrzeug angeordnet werden, ohne auf die besondere Platzierung hinsichtlich der Sensoren Rücksicht nehmen zu müssen. Damit wird eine hohe Flexibilität erreicht. Ist die Beschleunigungssensorik ausgelagert vom Steuergerät angeordnet, weist sie bereits eine Vorverarbeitung auf, um letztlich nur noch digitale Signale an das Steuergerät übertragen zu können. Diese digitalen Signale werden dann von einem Microcontroller oder einem anderen Prozessor im Steuergerät mittels eines dort gespeicherten Auswertealgorithmus ausgewertet um zu entscheiden, ob es sich um einen Crash handelt, welcher Art dieser Crash ist, welche Schwere er aufweist und in Abhängigkeit davon gegebenenfalls welche Personenschutzmittel ausgelöst werden müssen.

Die erfindungsgemäße Beschleunigungssensorik kann in Fahrzeuglängsrichtung zur Erfassung eines Frontalaufpralls angeordnet sein oder mit seiner Sensierungsrichtung in Fahrzeugquerrichtung zur Erfassung eines Fahrzeugseitenaufpralls. Es ist jedoch möglich, beide Anordnungen vorzusehen, wobei damit auch eine gegenseitige Plausibilisierung möglich ist. Weiterhin ist es möglich, auch eine dazu winklige Anordnung vorzusehen, beispielsweise bei 45° plus/minus von der Fahrzeuglängsachse aus gesehen. Auch vertikal empfmdliche Beschleunigungssensoren, also in Z-Richtung, sind hier vorsehbar.

In einer vorteilhaften Weiterbildung ist es möglich, dass die Beschleunigungssensorik mit weiteren Sensoren oder Plausibilitätssensoren verknüpft wird. Dazu gehören neben einer Umfeldsensorik, einer Insassensensorik, auch weitere Beschleunigungs- oder Körperschallsensoren oder auch Kontaktsensoren oder andere Annäherungssensoren und Aufprallsensoren, um die Signale der erfindungsgemäßen Beschleunigungssensorik zu plausibilisieren und gegebenenfalls näher zu differenzieren.

### Zeichnung

Ausführungsbeispiele der Erfindung sind in der Zeichnung dargestellt und werden in der nachfolgenden Beschreibung näher erläutert.

Es zeigen Figur 1 einen Einbauort der Beschleunigungssensorik, Figur 2 ein Blockdiagramm der erfindungsgemäßen Vorrichtung und Figur 3 ein weiteres Blockdiagramm der erfindungsgemäßen Vorrichtung.

### Beschreibung

Zur Erkennung von Unfällen und der entsprechenden Auslösung von Personenschutzmitteln sind Steuergeräte zur Ansteuerung dieser Personenschutzmittel im Fahrzeug Stand der Technik. Die Erkennung, ob eine Unfallsituation eingetreten ist und ob die Personenschutzmittel wie Gurtstraffer oder Airbags ausgelöst werden müssen, ist abhängig von der Crashschwere und erfolgt daher aufgrund der von den internen und externen Sensoren des Steuergeräts gelieferten Signalen. Hierbei werden meist Beschleunigungssensoren zur Aufnahme der Crashsignale verwendet. Zur Erkennung eines Frontcrashs oder Frontaufpralls ist im Steuergerät üblicherweise ein Zentralsensor, der empfindlich in Fahrzeuglängsrichtung, also in X-Richtung ist, integriert. Für problematische Frontalcrasharten wie einem Winkelcrash, einem Crash mit weicher Barriere oder einem Underride (bspw. eine LKW-Unterfahrt) werden zusätzlich Upfrontsensoren an der Fahrzeugfront eingesetzt. Diese Upfrontsensoren messen ebenfalls ein Beschleunigungssignal und übertragen es an das Steuergerät. Aus den Daten des zentral angeordneten Beschleunigungssensors und der Upfrontsensorik werden dann mit Hilfe eines Auslösealgorithmus Crashschwere und Crashart ermittelt und in Abhängigkeit davon die entsprechenden Personenschutzmittel ausgelöst. Die Upfrontsensorik dient auch als Redundanzpfad zum zentralen X-Sensor. Die Upfrontsensoren sind jedoch aufwendig und aufgrund der Motorraumanforderungen sowie der benötigten Verkabelung und Schnittstellen teuer.

Auch zur Seitenaufprallerkennung werden periphere Beschleunigungssensoren, beispielsweise an der B-Säule montiert. Als Redundanzpfad wird ein zusätzlicher in Fahrzeugquerrichtung, also Y-Zentralsensor im Airbag-Steuergerät verwendet. Die Ermittlung der Auslöseentscheidung hinsichtlich eines Seitenaufpralls erfolgt anhand der Signale der peripheren Beschleunigungssensoren in einem Auslösealgorithmus unter Berücksichtigung des Signals des Redundanzpfades.

Erfindungsgemäß ist nun nur noch eine zentral angeordnete mindestens einkanalige, vorzugsweise zweikanalige Beschleunigungssensorik vorgesehen, wobei bei jedem Kanal das Beschleunigungssignal normal gefiltert wird, beispielsweise mit 400 Hz, und zusätzlich mit einer höheren Grenzfrequenz parallel gefiltert wird, so dass ein breitbandigeres Signal vorliegt, das durch eine Filterung mit einer Grenzfrequenz von zwei bis vier kHz erzeugt wird. Mit der zweiten Filterung werden damit körperschallähnliche Informationen durch die höhere Grenzfrequenz gewonnen. Diese erlauben die Diskriminierung des Frontalcrashtyps im Auswertealgorithmus ohne die Verwendung der Upfrontsensorik. Das hochfrequente Beschleunigungssignal wird dabei zur Crashdiskriminierung, das niederfrequente Kernbeschleunigungssignal zur Plausibilisierung verwendet. Weiterhin ist die Diskriminierung von Seitencrashereignissen mit Hilfe der körperschallähnlichen Information und deren Plausibilisierung mit Hilfe der Kernbeschleunigungssignale je nach Fahrzeugcrashverhalten ohne periphere Seitensensoren möglich. Weiterhin ist es möglich, einen für Seitenaufprall ausgerichteten Zentralsensor der vorzugsweise zweikanalig ist, als Redundanzsensor zu peripheren Beschleunigungssensoren vorzusehen.

Durch die erfindungsgemäße Vorrichtung können demnach für die Frontalcrasherkennung je nach Fahrzeugtyp ein bis zwei externe Upfrontsensoren inklusive zugehöriger Schnittstellen und Verkabelung entfallen. Der am Steuergerät vorhandene einkanalige Beschleunigungssensor wird vorzugsweise durch einen zweikanaligen Sensor ersetzt, der für jeden Kanal zusätzlich einen breitbandigen Signalpfad mit entsprechender Auswertung erhält. Durch den zusätzlichen breitbandigen Ausgang kann mit einem Sensor sowohl das Kernbeschleunigungssignal als auch das Körperschallsignal erfasst werden.

Derselbe Sensor mit breitbandigem Ausgang wird als zentraler Y-Sensor zur Seitenaufprallerkennung bzw. als Redundanzpfad zur Seitenaufprallerkennung eingesetzt. Abhängig vom Seitencrashverhalten der Fahrzeugstruktur kann dadurch auf zwei periphere Beschleunigungssensoren verzichtet werden.

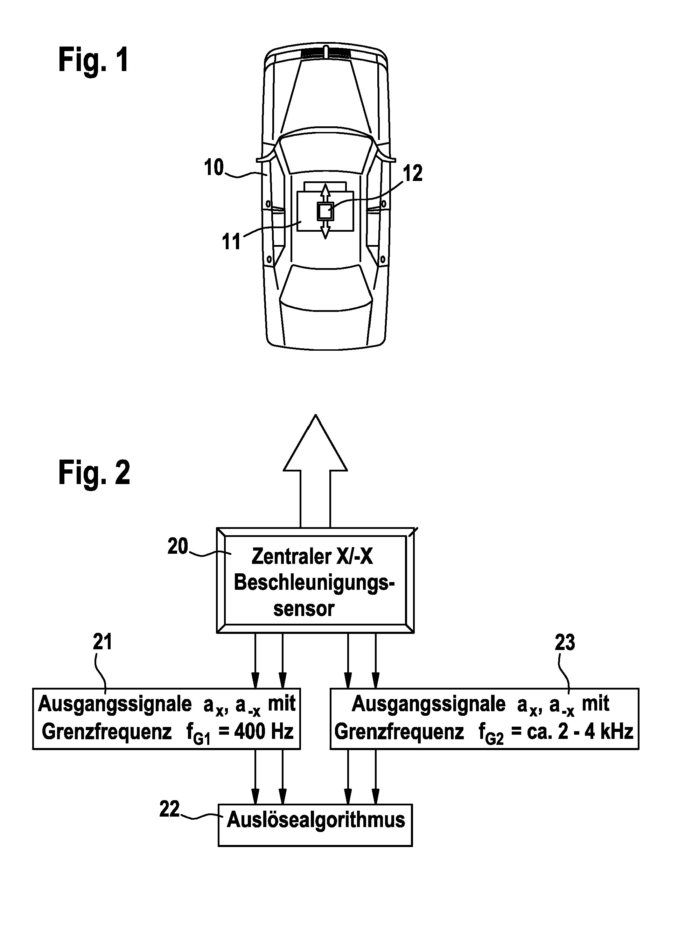

Figur 1 zeigt die Einbaulage der erfindungsgemäßen Beschleunigungssensorik, die zweikanalig ausgebildet ist, also in X- und -X-Richtung jeweils ein Signal ausgibt. Für jeden der beiden Kanäle wird dabei sowohl das Kernbeschleunigungssignal als auch das breitbandigere körperschallähnliche Signal durch die entsprechende Filterung gewonnen. Im Fahrzeug 10 ist hier ein Steuergerät 11 angeordnet, das die zweikanalige Beschleunigungssensorik 12 aufweist. Alternativ ist es möglich, dass die Beschleunigungssensorik abgesetzt vom Steuergerät 11 zentral angeordnet beispielsweise auf dem Tunnel verbleibt und das Steuergerät an einen anderen Einbauort im Fahrzeug beispielsweise als Einsteckkarte eingebaut wird. Bei dieser abgesetzten Einbauart braucht beim Einbauort des Steuergeräts nicht auf das besondere Anforderungsprofil des Beschleunigungssensors Rücksicht genommen zu werden.

Figur 2 zeigt in einem Blockschaltbild, wie die Signale des zweikanaligen Beschleunigungssensors ausgewertet werden. Für jeden Kanal wird jeweils eine Filterung mit 400 Hz, dargestellt im Block 21, und eine Filterung mit zwei bis vier kH, dargestellt im Block 23 des zweikanaligen Beschleunigungssensors 20 vorgenommen. Es handelt sich also um zwei Signalpfade. Bei den Frequenzen handelt es sich um obere Grenzfrequenzen, so dass hier beispielsweise eine Tiefpassfilterung möglich ist, die entweder analog oder digital realisiert werden kann. Alternativ sind auch Bandpässe möglich, wenn auch eine untere Grenzfrequenz notwendig ist. Die vier Signale werden dann dem Auslösealgorithmus 22 zugeführt. Dort kann anhand dieser Signale dann eine Crashdiskriminierung vorgenommen werden. Das hochfrequente Beschleunigungssignal wird dabei zur Crashdiskriminierung, das niederfrequente Kernbeschleunigungssignal zur Plausibilisierung verwendet.

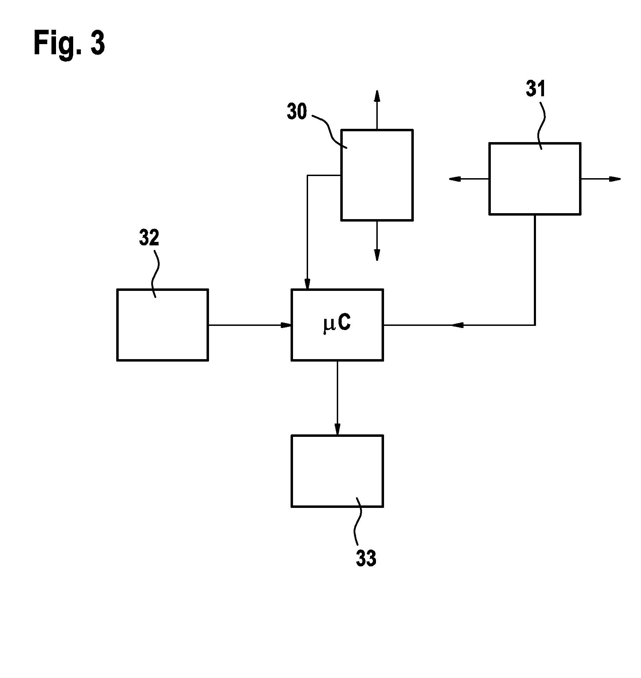

Figur 3 zeigt eine weitere Konfiguration, bei der nunmehr zwei zweikanalige Beschleunigungssensoren 30 und 31 vorgesehen sind, die 90° zueinander versetzt angeordnet sind, um so sowohl in Fahrzeuglängsrichtung als auch in Fahrzeugquerrichtung Beschleunigungen erfassen zu können. Die Signale des Beschleunigungssensors 30, der in Fahrzeuglängsrichtung empfmdlich ist, werden vom Microcontroller µC wie auch die Signale des Beschleunigungssensors 31, der in Fahrzeugquerrichtung empfindlich ist, aufgenommen und im Auslösealgorithmus verarbeitet. Zusätzlich können noch weitere Sensorsignale von anderen Plausibilitäts- oder anderen Sensoren in den Algorithmus einfließen. Dies wird durch den Block 32 symbolisiert. Zu diesen Sensoren zählen neben anderen Beschleunigungskontakt- und Umfeldsensoren auch Insassensensoren. Auch Navigationsdaten können hier berücksichtigt werden. In Abhängigkeit dieser Auswertung werden dann gegebenenfalls Personenschutzmittel 33 wie Airbags oder Gurtstraffer angesteuert.

## Patentansprüche

1. Vorrichtung zur Aufprallerkennung mittels einer zentral angeordneten mindestens einkanaligen Beschleunigungssensorik (12, 20, 30, 31), **dadurch gekennzeichnet, dass** die Beschleunigungssensorik (12,20, 30, 31) derart konfiguriert ist, dass für jeden der Kanäle eine Mehrzahl von Filtern vorgesehen sind, wobei die Filter unterschiedliche Grenzfrequenzen aufweisen.

2. Vorrichtung nach Anspruch 1, **dadurch gekennzeichnet, dass** die Beschleunigungssensorik zweikanalig ausgebildet ist, wobei pro Kanal zwei Filter vorgesehen sind, so dass eine erste und zweite Grenzfrequenz zur Filterung eines Signals eines Kanals verwendet werden.

3. Vorrichtung nach Anspruch 2, **dadurch gekennzeichnet, dass** die zweite Grenzfrequenz zwischen zwei bis vier kH liegt.

4. Vorrichtung nach Anspruch 2 oder 3, **dadurch gekennzeichnet, dass** die erste Grenzfrequenz bei 400 Hz liegt.

5. Vorrichtung nach Anspruch 1, **dadurch gekennzeichnet, dass** die Beschleunigungssensorik (12, 20, 30, 31) außerhalb eines Steuergeräts (11) angeordnet ist.

6. Vorrichtung nach Anspruch 1, **dadurch gekennzeichnet, dass** die Beschleunigungssensorik (12, 20, 30, 31) in Fahrzeuglängs- (X) und/oder Fahrzeugquerrichtung (Y) angeordnet ist.

7. Vorrichtung nach einer der vorherigen Ansprüche, **dadurch gekennzeichnet, dass** der Beschleunigungssensorik (12, 20, 30, 31) eine Plausibilitätssensorik (32) zugeordnet ist.
